# EUROPEAN PATENT SPECIFICATION

(11) **EP 4 102 914 B1**
(45) Date of publication and mention of the grant of the patent: **23.04.2025**
(21) Application number: 21750484.4
(22) Date of filing: 03.02.2021
(51) Int. Cl.: H04W 48/08, H04L 5/00, H04W 24/02, H04W 48/16, H04W 88/06, H04W 56/00

(54) **SYSTEM OPERATION MODE DETERMINATION METHOD, AND TERMINAL**
VERFAHREN UND ENDGERÄT ZUR BESTIMMUNG EINES SYSTEMBETRIEBSMODUS
PROCÉDÉ DE DÉTERMINATION DU MODE DE FONCTIONNEMENT D'UN SYSTÈME ET TERMINAL

(30) Priority: 07.02.2020 CN 202010082907
(43) Date of publication of application: 14.12.2022
(73) Proprietor: Vivo Mobile Communication Co., Ltd., Dongguan, Guangdong 523863 (CN)
(72) Inventor: LI, Gen, Dongguan, Guangdong 523863 (CN); PAN, Xueming, Dongguan, Guangdong 523863 (CN)
(74) Representative: Petraz, Gilberto Luigi
(86) International application number: PCT/CN2021/075009
(87) International publication number: WO 2021/155799

(56) References cited:
- WO-A1-2019/156456
- WO-A1-2019/184574
- CN-A- 105 392 206
- CN-A- 105 933 910
- US-A1- 2015 237 628
- US-A1- 2017 078 868
- US-A1- 2019 342 826
- VIVO, CMCC: "Resolution of In-device issue in NR", 3GPP DRAFT; RP-181659 RESOLUTION OF IN-DEVICE CO-EXISTENCE ISSUES IN NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG RAN, no. Gold Coast, Australia; 20180910 - 20180913, 9 September 2018 (2018-09-09), Mobile Competence Centre ; 650, route des Lucioles ; F-06921 Sophia-Antipolis Cedex ; France, XP051550754

## Description

### TECHNICAL FIELD

The present invention relates to the field of communications technologies, and in particular, to a method for determining a system operating mode and a terminal.

### BACKGROUND

Some communication systems (for example, 5G) support a plurality of operating modes, such as the licensed mode and the unlicensed mode. In other words, the system operating mode of the terminal may support the licensed mode and the unlicensed mode. In addition, at present, the terminal determines the system operating mode based on the band only, but in the future, there may be some bands which are licensed bands in some regions or situations, and may be configured as unlicensed bands in other regions or situations. In this way, if the system operating mode is still determined based on the band, a system operating mode error of the terminal may occur.

US2015/237628A1 discloses that the mode selection module may determine the frequency band to be used, and thus whether the device is to operate in an unlicensed spectrum mode or licensed spectrum mode based on user input and/or location information provided by GPS receiver.

### SUMMARY

Embodiments of the present invention provide a method for determining a system operating mode and a terminal to solve the problem that an error may occur in the system operating mode of the terminal when the terminal determines the system operating mode based on the band.

According to a first aspect, an embodiment of the present disclosure provides a method for determining a system operating mode which is defined in claim 1.

According to a second aspect, embodiments of the present invention provide a terminal which is defined in claim 8.

According to a third aspect, an embodiment of the present invention provides a terminal which is defined in claim 13.

According to a fourth aspect, an embodiment of the present invention provides a computer-readable storage medium which is defined in claim 14.

According to a fifth aspect, an embodiment of the present invention provides a computer program product which is defined in claim 15.

Further advantageous embodiments of the present disclosure are indicated in the dependent claims.

### BRIEF DESCRIPTION OF DRAWINGS

FIG. 1 is a structural diagram of a network system to which embodiments of the present invention can be applied;
FIG. 2 is a flowchart of a method for determining a system operating mode according to an embodiment of the present invention;
FIG. 3 is a structural diagram of a terminal according to an embodiment of the present invention; and
FIG. 4 is a structural diagram of another terminal according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some rather than all of the embodiments of the present invention.

The term "include" and any other variants in the specification and claims of this application mean to cover the non-exclusive inclusion, for example, a process, method, system, product, or device that includes a list of steps or units is not necessarily limited to those steps or units, but may include other steps or units not expressly listed or inherent to such a process, method, product, or device. In addition, "and/or" used in the description and the claims means at least one of the connected objects. For example, A and/or B represents the following three cases: Only A exists, only B exists, and both A and B exist.

In the embodiments of the present invention, the term such as "exemplary" or "for example" is used to represent an example, an instance, or a description. Any embodiment or design solution described as "exemplary" or "for example" in the embodiments of the present invention should not be construed as being more preferred or advantageous than other embodiments or design solutions. To be precise, the use of the term such as "exemplary" or "for example" is intended to present a related concept in a specific manner.

Embodiments of the present invention will be described below with reference to the accompanying drawings. The method for determining a system operating mode and a terminal provided in the embodiments of the present invention may be applied to a wireless communications system. The wireless communication system may be a New Radio (New Radio, NR) system or other systems such as an LTE-Advanced (LTE-Advanced, LTE-A) system, a Long Term Evolution (Long Term Evolution, LTE) system, or a subsequent evolution communication system.

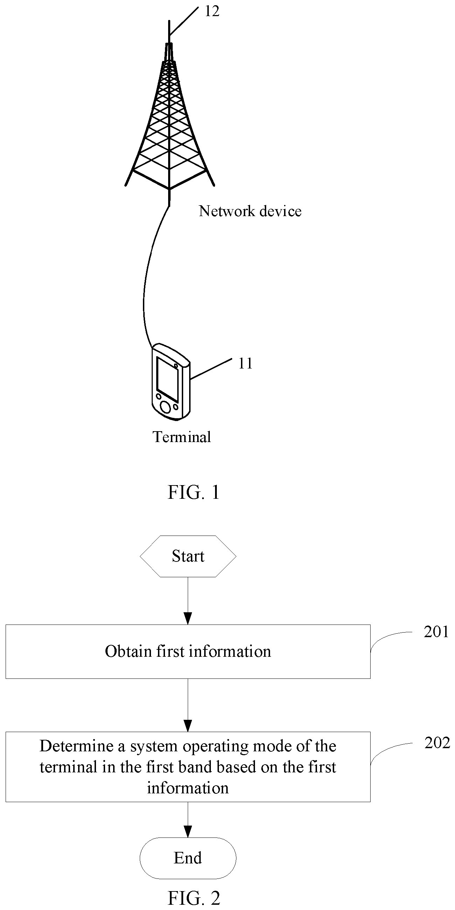

Referring to FIG. 1, FIG. 1 is a structural diagram of a network system to which an embodiment of the present invention can be applied. As shown in FIG. 1, the network system includes a terminal 11 and a network device 12, where the terminal 11 may be user equipment (User Equipment, UE) or other terminal side devices such as a mobile phone, a tablet personal computer (Tablet Personal Computer), a laptop computer (Laptop Computer), a personal digital assistant (personal digital assistant, PDA), a mobile Internet device (Mobile Internet Device, MID), a wearable device (Wearable Device), or a robot. It should be noted that a specific type of the terminal 11 is not limited in the embodiments of the present invention. The network device 12 may be a base station in 4G, 5G, or later releases, or a base station in other communications systems, or is referred to as a Node B, an Evolved Node B, a transmission reception point (Transmission Reception Point, TRP), an access point (Access Point, AP), or other words in the field, as long as the same technical effect is achieved. The network device is not limited to specific technical words. In addition, the network device 12 may be a master node (Master Node, MN) or a secondary node (Secondary Node, SN). It should be noted that in the embodiments of the present invention, the 5G base station is merely used as an example, but a specific type of the network device is not limited.

Referring to FIG. 2, FIG. 2 is a flowchart of a method for determining a system operating mode according to an embodiment of the present invention. The method is performed by a terminal. As shown in FIG. 2, the method includes the following steps.

Step 201, obtain first information, where the first information is information detected or received by the terminal.

The obtaining first information may be obtaining the first information in a case that an operating band of the terminal includes the first band, for example, the terminal obtains the first information through detection or receiving.

It should be noted that the first information detected or received by the terminal refers to the information determined by the terminal through an operation of detection or receiving. For example, geographical location information, a synchronization signal block (synchronization signal block, SSB) or other downlink signals.

Step 202, determine a system operating mode of the terminal in a first band based on the first information, where the system operating mode includes a licensed mode and an unlicensed mode.

The determining a system operating mode of the terminal in a first band based on the first information may be determining a system operating mode explicitly or implicitly indicated by the first information as the system operating mode in the first band. For example, the first information explicitly or implicitly indicates that the first band is a licensed band, thereby determining a licensed mode, or the first information explicitly or implicitly indicates that the first band is an unlicensed band, thereby determining an unlicensed mode.

It should be noted that, in the embodiments of the present invention, the unlicensed mode may also be referred to as a shared frequency domain access mode or a shared transmission mode.

In the embodiments of the present invention, the system operating mode of the terminal in the first band may be accurately determined by using the first information, so as to avoid a system operating mode error of the terminal.

As an optional implementation, the first information includes geographical location information detected by the terminal; and the determining a system operating mode of the terminal in a first band based on the first information includes:
determining the system operating mode of the terminal in the first band based on a location area to which the geographical location information belongs.

The geographical location information may be information about current geographical location (for example, a country or a region) of the terminal obtained by the terminal through a positioning system (for example, the GPS, the Beidou system, or the like). Therefore, the terminal determines that the first band is a licensed band or an unlicensed band based on the geographical location thereof, and then determines the system operating mode of the band.

It should be noted that configurations of the first band may vary with countries or regions. For example, in some countries or regions, the first band is configured as a licensed band, while in another country or region, the first band is configured as an unlicensed band. For example, in some countries, the 6/60 GHz band is configured as the unlicensed band, while in other countries, the 6/60 GHz band is configured as the licensed band. In this way, the system operating mode of the terminal in the first band may be determined based on the geographical location information.

An example is as follows:
The terminal obtains current geographical location (a country or a region) information through the positioning system (for example, the GPS, the Beidou system, or the like) before initial access. The terminal determines the system operating mode of the band based on a licensed mode of the first band of the current geographical location (a country or a region), and performs initial access and subsequent processing based on the determined system operating mode of the band. If there is no positioning signal during the initial access of the terminal, the last positioning information or the operating mode of the last access system may be used to determine the operating mode for access.

The first information includes related information of an SSB detected by the terminal in initial access on the first band, where
related information of the SSB when the first band is allocated as a licensed band is different from relevant information of the SSB when the first band is allocated as an unlicensed band.

The related information of the SSB may be information related to the SSB.

In this implementation, the system operating mode of the first band may be indicated by using different related information of the SSB.

The related information of the SSB includes at least one of the following:
a frequency location of a synchronization raster (sync raster) of the SSB;
a channel number of the SSB; and
a time domain location of the SSB.

Optionally, the related information of the SSB further includes at least one of the following:
feature information of at least one of a primary synchronization signal (Primary Synchronization Signal, PSS), a secondary synchronization signal (Secondary Synchronization Signal, SSS), and a demodulation reference signal (demodulation reference signal, DMRS) of the SSB;
an index of the SSB;
a candidate index of the SSB; and
a payload of the SSB, where the payload is used to indicate that the first band is a licensed band or an unlicensed band.

The frequency location of a synchronization raster of the SSB may be understood as that the frequency points of the synchronization raster on the first band are classified in advance, and a part of the frequency points can only be used to send the SSB in the licensed mode, and the other part of the frequency points can only be used to send the SSB in the unlicensed mode, so that the system operating mode can be accurately determined. Similarly, some channels may be configured to send the SSBs in the licensed mode, and other part of the channels can only send the SSBs in the unlicensed mode. Further, the channel number may be a global synchronization channel number (Global Synchronization Channel Number, GSCN).

An example is as follows:
For the synchronization raster defined in the first band (corresponding to a set of GSCN frequency point numbers), it is clear that a set S1 of a part of frequency points of the synchronization raster is the location of the frequency points in which the SSB is sent in the licensed mode system, and a set S2 of the other part of the frequency points of the synchronization raster is the location of the frequency points in which the SSB is sent in the unlicensed mode system. Specifically, two band (band) numbers are defined, one band number is corresponding to the licensed mode, and the other band number is corresponding to the unlicensed mode. For example, the synchronization rasters S1 and S2 are defined for the first band and the second band respectively, and the two bands are orthogonal and have no intersection. The terminal searches all synchronization rasters defined on the two bands, determines a transmission band number and thus determines the licensed mode. When the detected PSS and SSS are in the frequency point in which the SSB is sent in the unlicensed mode system, the terminal performs the initial access and subsequent operations based on the process defined in the unlicensed mode; otherwise, the licensed mode is used.

Further, in combination with the geographical location information, when the terminal can obtain the location information and get the licensed mode of the frequency spectrum in the country/region corresponding to the location information, searching and detection for the SSB is only performed on the synchronization raster corresponding to the licensed mode, which can reduce power consumption.

The feature information of at least one of the PSS, the SSS, and the DMRS may be independent feature information of each of the PSS, the SSS, and the DMRS, or common feature information among the PSS, the SSS, and the DMRS. For example, the feature information of at least one of the PSS, the SSS, and the DMRS of the SSB includes at least one of the following:
a frequency domain location relationship between the PSS and the SSS;
a time domain location relationship between the PSS and the SSS;
a phase difference between the PSS and the SSS;
a cyclic shift of the PSS;
a cyclic shift of the SSS;
a sequence of the PSS;
a sequence of the SSS;
a phase of the DMRS; and
a cyclic shift of the DMRS.

For example, in the time domain or frequency domain location relationship between the PSS and the SSS, if the PSS is before the SSS, the licensed mode is used; if the PSS is after the SSS, the unlicensed mode is used. Certainly, this is just an example.

For example, the licensed mode and the unlicensed mode can be distinguished by configuring different phase differences for the PSS and the SSS. Likewise, the cyclic shift of the PSS or the SSS may be configured differently to distinguish the licensed mode from the unlicensed mode, and the cyclic shift of the PSS may further be configured to be different from the cyclic shift of the SSS to distinguish the licensed mode from the unlicensed mode.

In addition, the licensed mode and the unlicensed mode can be distinguished by configuring different sequences for the PSS and/or the SSS. For example, a part of the PSS/SSS sequences are used for licensed mode transmission, and the other part of the PSS/SSS sequences are used for unlicensed mode transmission.

Likewise, the licensed mode and the unlicensed mode can be distinguished by configuring different phases or cyclic shifts for the DMRS. Further, the DMRS may be a DMRS of a physical broadcast channel (Physical Broadcast Channel, PBCH).

An example is as follows:
The protocol specifies operating mode information of the feature information delivery system related to the PSS and the SSS, where:
when the location relationship between the PSS and the SSS is used to transmit the system operating mode information, the terminal detects the PSS and the SSS on the SSB of all synchronization rasters (sync raster) defined in the band, and determines whether the system operating mode is licensed or unlicensed by the relative location relationship between the detected SSS and PSS; or
when the phase difference or the cyclic shift difference between the PSS and the SSS is used to transmit system operating mode information, the terminal detects the PSS on the SSB of all synchronization rasters defined in the band, and determines whether the system operating mode is licensed or unlicensed by the phase difference or the cyclic shift difference between the detected PSS and SSS; or
when sequences of the PSS and the SSS are used to transmit the operating mode information, the protocol specifies one set of PSS/SSS sequences for licensed mode transmission and another set of PSS/SSS sequences for unlicensed mode transmission, and the terminal detects the PSS/SSS on the SSB of all synchronization rasters defined in the band, and determines whether the system operating mode is licensed or unlicensed by the sequences of the detected PSS/SSS.

The time domain location, the SSB index (SSB index), and the candidate SSB index (Candidate SSB index) of the SSB may be information about the time domain location, the SSB index (SSB index), and the candidate SSB index (Candidate SSB index) of the SSB detected by the terminal during the initial access in the first step. For example, it is assumed that the SSB in the licensed mode is in the first half of the frame, and the SSB in the unlicensed mode is in the second half of the frame, or it is assumed that the SSB index 0-8 is used for the licensed mode transmission, and the SSB index 9-20 is used for the unlicensed mode transmission.

An example is as follows:
The protocol specifies that the SSB of the licensed system/unlicensed system is sent at a specific time location of an existing frame structure. The terminal detects the SSB on all synchronization rasters defined in the band, obtains timing information based on decoded SSB information, and determines the specific time location (for example, the first half frame or the SSB index) to which the SSB belongs based on the timing information of the SSB, so as to determine whether the system operating mode is licensed or unlicensed.

The payload (payload) of the SSB may be that the licensed mode or the unlicensed mode is indicated by displaying the payload, for example, the licensed mode or the unlicensed mode is indicated by a reserved bit (reserved bit) in the PBCH.

In this implementation, since the licensed mode or the unlicensed mode is indicated by the related information of the SSB, the transmission overhead is saved without adding any additional signaling.

As an optional implementation, the first information includes system information received by the terminal in initial access on the first band, and the system information is used to indicate that the first band is a licensed band or an unlicensed band.

The system information may be a system message, for example, a system information block (System Information Block, SIB).

Optionally, the system information explicitly or implicitly indicates that the first band is a licensed band or an unlicensed band. The implicit indication may be implicitly indicating that the first band is a licensed band or an unlicensed band through band (band) information of the system information. Further, if the SSB detection process in the licensed mode is inconsistent with the SSB detection process in the unlicensed mode, the terminal may detect the SSB based on the SSB detection process in the licensed mode and the unlicensed mode respectively, and perform blind detection respectively based on the SSB detected in the two SSB detection processes, so as to obtain the system message, such as the SIB message, in one of the blind detections, and then determines the system operating mode; or if master information block (Master Information Block, MIB) information in the licensed mode is inconsistent with master information block information in the unlicensed mode, the terminal may perform blind detection respectively based on the MIB information in the licensed mode and in the unlicensed mode, so as to obtain the system message, such as the SIB message, in one of the blind detections, and then determines the system operating mode.

For example, it may be indicated that the system operating mode is licensed or unlicensed by displaying the MIB information, the SIB information, or the RRC information of the system. The terminal may confirm the system operating mode through the band information in the SIB information, that is, the protocol may number the licensed mode and the unlicensed mode for the same band.

As an optional implementation, the first information includes information received by the terminal through a second band.

The foregoing information is control information received by the terminal through the second band. For example, broadcast SIB or radio resource control (Radio Resource Control, RRC) configuration information, and the like.

In addition, the second band and the first band may be bands of different carriers or different cells, for example, the second band is a primary cell (Primary Cell, PCell), and the first band is a secondary cell (Secondary Cell, SCell).

In this implementation, since the first information may be obtained through the second band, it is more effective to ensure that the system operating mode of the terminal is error-free.

In the embodiments of the present invention, the method includes: obtaining first information, where the first information is information detected or received by the terminal; and determining a system operating mode of the terminal in a first band based on the first information, where the system operating mode includes a licensed mode and an unlicensed mode. This may avoid a system operating mode error of the terminal.

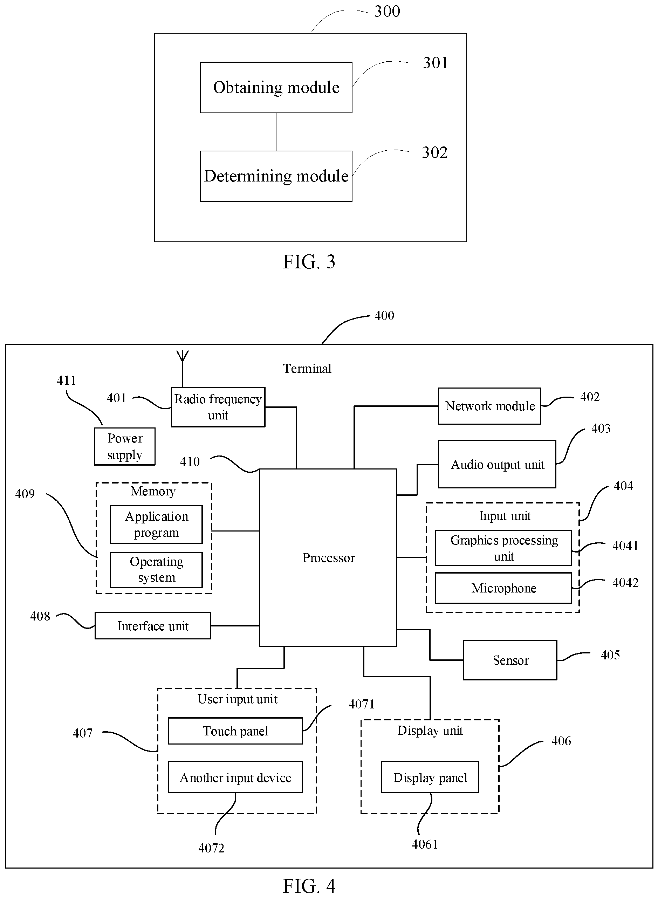

Referring to FIG. 3, FIG. 3 is a structural diagram of a terminal according to an embodiment of the present invention. As shown in FIG. 3, a terminal 300 includes:
an obtaining module 301, configured to obtain first information, where the first information is information detected or received by the terminal; and
a determining module 302, configured to determine a system operating mode of the terminal in a first band based on the first information, where the system operating mode includes a licensed mode and an unlicensed mode.

Optionally, the first information includes geographical location information detected by the terminal; and the determining a system operating mode of the terminal in a first band based on the first information includes:
determining the system operating mode of the terminal in the first band based on a location area to which the geographical location information belongs.

The first information includes related information of a synchronization signal block (SSB) detected by the terminal in initial access on the first band, where
related information of the SSB when the first band is allocated as a licensed band is different from relevant information of the SSB when the first band is allocated as an unlicensed band.

The related information of the SSB includes at least one of the following:
a frequency location of a synchronization raster (sync raster) of the SSB;
a channel number of the SSB; and
a time domain location of the SSB.

Optionally, the related information of the SSB further includes at least one of the following:
feature information of at least one of a primary synchronization signal (PSS), a secondary synchronization signal (SSS), and a demodulation reference signal (DMRS) of the SSB;
an index of the SSB;
a candidate index of the SSB; and
a payload of the SSB, where the payload is used to indicate that the first band is a licensed band or an unlicensed band.

Optionally, the feature information of at least one of the PSS, the SSS, and the DMRS of the SSB includes at least one of the following:
a frequency domain location relationship between the PSS and the SSS;
a time domain location relationship between the PSS and the SSS;
a phase difference between the PSS and the SSS;
a cyclic shift of the PSS;
a cyclic shift of the SSS;
a sequence of the PSS;
a sequence of the SSS;
a phase of the DMRS; and
a cyclic shift of the DMRS.

Optionally, the first information includes system information received by the terminal in initial access on the first band, and the system information is used to indicate that the first band is a licensed band or an unlicensed band.

Optionally, the system information explicitly or implicitly indicates that the first band is a licensed band or an unlicensed band.

Optionally, the first information includes information received by the terminal through a second band.

Optionally, the first information includes control information received by the terminal through the second band.

The terminal provided in this embodiment of the present invention can implement the processes implemented by the terminal in the method embodiment in FIG. 2, and may avoid a system operating mode error of the terminal. To avoid repetition, details are not described herein again.

FIG. 4 is a schematic diagram of a hardware structure of a terminal for implementing the embodiments of the present invention. The terminal 400 includes but is not limited to components such as a radio frequency unit 401, a network module 402, an audio output unit 403, an input unit 404, a sensor 405, a display unit 406, a user input unit 407, an interface unit 408, a memory 409, a processor 410, and a power supply 411. A person skilled in the art may understand that a structure of the terminal shown in FIG. 4 does not constitute a limitation on the terminal, and the terminal may include more or fewer components than those shown in the figure, or combine some components, or have different component arrangements. In this embodiment of the present invention, the terminal includes but is not limited to a mobile phone, a tablet computer, a laptop computer, a palmtop computer, an in-vehicle terminal, a robot, a wearable device, a pedometer, and the like.

The radio frequency unit 401 is configured to obtain first information, where the first information is information detected or received by the terminal.

The processor 410 determines a system operating mode of the terminal in a first band based on the first information, where the system operating mode includes a licensed mode and an unlicensed mode.

Optionally, the first information includes geographical location information detected by the terminal; and the determining a system operating mode of the terminal in a first band based on the first information includes:
determining the system operating mode of the terminal in the first band based on a location area to which the geographical location information belongs.

The first information includes related information of a synchronization signal block (SSB) detected by the terminal in initial access on the first band, where
related information of the SSB when the first band is allocated as a licensed band is different from relevant information of the SSB when the first band is allocated as an unlicensed band.

The related information of the SSB includes at least one of the following:
a frequency location of a synchronization raster (sync raster) of the SSB;
a channel number of the SSB; and
a time domain location of the SSB.

Optionally, the related information of the SSB further includes at least one of the following:
feature information of at least one of a primary synchronization signal (PSS), a secondary synchronization signal (SSS), and a demodulation reference signal (DMRS) of the SSB;
an index of the SSB;
a candidate index of the SSB; and
a payload of the SSB, where the payload is used to indicate that the first band is a licensed band or an unlicensed band.

Optionally, the feature information of at least one of the PSS, the SSS, and the DMRS of the SSB includes at least one of the following:
a frequency domain location relationship between the PSS and the SSS;
a time domain location relationship between the PSS and the SSS;
a phase difference between the PSS and the SSS;
a cyclic shift of the PSS;
a cyclic shift of the SSS;
a sequence of the PSS;
a sequence of the SSS;
a phase of the DMRS; and
a cyclic shift of the DMRS.

Optionally, the first information includes system information received by the terminal in initial access on the first band, and the system information is used to indicate that the first band is a licensed band or an unlicensed band.

Optionally, the system information explicitly or implicitly indicates that the first band is a licensed band or an unlicensed band.

Optionally, the first information includes information received by the terminal through a second band.

Optionally, the first information includes control information received by the terminal through the second band.

The foregoing terminal may avoid a system operating mode error of the terminal.

It should be understood that, in this embodiment of the present invention, the radio frequency unit 401 may be configured to receive and send information or a signal in a call process. Specifically, after receiving downlink data from a base station, the radio frequency unit 401 sends the downlink data to the processor 410 for processing. In addition, the radio frequency unit 401 sends uplink data to the base station. Usually, the radio frequency unit 401 includes but is not limited to an antenna, at least one amplifier, a transceiver, a coupler, a low noise amplifier, a duplexer, and the like. In addition, the radio frequency unit 401 may communicate with a network and another device through a wireless communication system.

The terminal provides wireless broadband Internet access to a user through the network module 402, for example, helps the user receive and send e-mails, browse web pages, access streaming media, and the like.

The audio output unit 403 may convert audio data received by the radio frequency unit 401 or the network module 402 or stored in the memory 409 into an audio signal and output the audio signal as a sound. In addition, the audio output unit 403 may further provide an audio output (for example, a call signal received voice, or a message received voice) related to a specific function implemented by the terminal 400. The audio output unit 403 includes a speaker, a buzzer, a telephone receiver, and the like.

The input unit 404 is configured to receive an audio signal or a video signal. The input unit 404 may include a graphics processing unit (Graphics Processing Unit, GPU) 4041 and a microphone 4042. The graphics processing unit 4041 is used to process image data of a static picture or a video obtained by an image capturing device (for example, a camera) in a video capturing mode or an image capturing mode. A processed image frame may be displayed on the display unit 406. The image frame processed by the graphics processing unit 4041 may be stored in the memory 409 (or another storage medium) or sent by using the radio frequency unit 401 or the network module 402. The microphone 4042 may receive a sound and can process such sound into audio data. Processed audio data may be converted, in a call mode, into a format that can be sent to a mobile communication base station by using the radio frequency unit 401 for output.

The terminal 400 further includes at least one sensor 405, for example, a light sensor, a motion sensor, and another sensor. Specifically, the light sensor includes an ambient light sensor and a proximity sensor. The ambient light sensor may adjust luminance of the display panel 4061 based on brightness of ambient light. The proximity sensor may turn off the display panel 4061 and/or backlight when the terminal 400 is moved to an ear. As a type of the motion sensor, an accelerometer sensor may detect magnitude of acceleration in each direction (generally, on three axes), and may detect magnitude and a direction of gravity when being static. The accelerometer sensor may be used for recognizing a terminal gesture (for example, portrait and landscape orientation switching, a related game, or magnetometer posture calibration), a function related to vibration recognition (for example, a pedometer or a strike), or the like. The sensor 405 may further include a fingerprint sensor, a pressure sensor, an iris sensor, a molecular sensor, a gyroscope, a barometer, a hygrometer, a thermometer, an infrared sensor, and the like. Details are not described herein.

The display unit 406 is configured to display information input by a user or information provided for a user. The display unit 406 may include a display panel 4061, and the display panel 4061 may be configured in a form of a liquid crystal display (Liquid Crystal Display, LCD), an organic light-emitting diode (Organic Light-Emitting Diode, OLED), or the like.

The user input unit 407 may be configured to receive input digit or character information and generate key signal input related to user setting and function control of the terminal. Specifically, the user input unit 407 includes a touch panel 4071 and another input device 4072. The touch panel 4071 is also referred to as a touchscreen, and may collect a touch operation performed by a user on or near the touch panel 4071 (such as an operation performed by a user on the touch panel 4071 or near the touch panel 4071 by using any proper object or accessory, such as a finger or a stylus). The touch panel 4071 may include two parts: a touch detection apparatus and a touch controller. The touch detection apparatus detects a touch location of the user, detects a signal carried by a touch operation, and transmits the signal to the touch controller.

The touch controller receives touch information from the touch detection apparatus, converts the touch information to touch point coordinates, sends the touch point coordinates to the processor 410, and receives and executes a command from the processor 410. In addition, the touch panel 4071 may be implemented as a resistive type, a capacitive type, an infrared type, a surface acoustic wave type, or the like. In addition to the touch panel 4071, the user input unit 407 may further include another input device 4072. Specifically, the another input device 4072 may include but is not limited to: a physical keyboard, a function button (such as a volume control button, a switch button), a trackball, a mouse, and a joystick, which is not described herein.

Further, the touch panel 4071 may cover the display panel 4061. After detecting the touch operation for or near the touch panel 4071, the touch panel 4071 transmits the touch operation to the processor 410 to determine a type of a touch event, and then the processor 410 provides corresponding visual output on the display panel 4061 based on the type of the touch event. In FIG. 4, the touch panel 4071 and the display panel 4061 are used as two independent components to implement input and output functions of the terminal. However, in some embodiments, the touch panel 4071 and the display panel 4061 may be integrated to implement the input and output functions of the terminal. This is not specifically limited herein.

The interface unit 408 is an interface connecting an external apparatus to the terminal 400. For example, the external apparatus may include a wired or wireless headset port, an external power supply (or battery charger) port, a wired or wireless data port, a storage card port, a port configured to connect to an apparatus having an identification module, an audio input/output (I/O) port, a video I/O port, a headset port, and the like. The interface unit 408 may be configured to receive input (for example, data information and power) from the external apparatus and transmit the received input to one or more elements in the terminal 400, or may be configured to transmit data between the terminal 400 and the external apparatus.

The memory 409 may be configured to store a software program and various data. The memory 409 may mainly include a program storage area and a data storage area. The program storage area may store an operating system, an application required by at least one function (for example, a sound play function or an image display function), and the like. The data storage area may store data (for example, audio data or an address book) or the like created based on use of the mobile phone. In addition, the memory 409 may include a high-speed random access memory, and may further include a nonvolatile memory, for example, at least one magnetic disk storage device, a flash storage device, or another volatile solid-state storage device.

The processor 410 is a control center of the terminal, and connects all parts of the entire terminal by using various interfaces and lines. By running or executing a software program and/or a module stored in the memory 409 and invoking data stored in the memory 409, the processor performs various functions of the terminal and data processing, to perform overall monitoring on the terminal. The processor 410 may include one or more processing units. Preferably, an application processor and a modem processor may be integrated into the processor 410. The application processor mainly processes an operating system, a user interface, an application program, and the like. The modem processor mainly processes wireless communications. It can be understood that, alternatively, the modem processor may not be integrated into the processor 410.

The terminal 400 may further include the power supply 411 (such as a battery) that supplies power to each component. Preferably, the power supply 411 may be logically connected to the processor 410 by using a power management system, so as to implement functions such as charging, discharging, and power consumption management by using the power management system.

In addition, the terminal 400 includes some function modules not shown, and details are not described herein.

Preferably, an embodiment of the present invention further provides a terminal, including a processor 410, a memory 409, and a computer program stored in the memory 409 and executable on the processor 410. When executed by the processor 410, the computer program implements the processes of the foregoing embodiments of the method for determining a system operating mode, and a same technical effect can be achieved. To avoid repetition, details are not described herein again.

An embodiment of the present invention further provides a computer-readable storage medium. A computer program is stored in the computer-readable storage medium, and when the computer program is executed by a processor, the method for determining a system operating mode provided in the embodiments of the present invention can be implemented, and a same technical effect can be achieved. To avoid repetition, details are not described herein again. The computer-readable storage medium is, for example, a read-only memory (Read-only Memory, ROM), a random access memory (Random Access Memory, RAM), a magnetic disk, or an optical disc.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of the present invention essentially or the part contributing to existing technologies may be implemented in a form of a software product. The computer software product is stored in a storage medium (such as a ROM/RAM, a magnetic disk, or an optical disc) and includes several instructions for instructing a terminal (which may be a mobile phone, a computer, a server, an air conditioner, or a network device) to execute the methods described in the embodiments of the present invention.

The embodiments of the present invention are described with reference to the accompanying drawings. However, the present invention is not limited to the foregoing specific implementations. The foregoing specific implementations are merely examples, but are not limiting.

## Claims

1. A method for determining a system operating mode, performed by a terminal (11), and the method comprising:
obtaining (201) first information, wherein the first information is information detected or received by the terminal (11); and
determining (202) a system operating mode of the terminal (11) in a first band based on the first information, wherein the system operating mode comprises a licensed mode and an unlicensed mode;
**characterized in that** the first information comprises related information of a synchronization signal block, SSB, detected by the terminal (11) in initial access on the first band, wherein related information of the SSB when the first band is allocated as a licensed band is different from relevant information of the SSB when the first band is allocated as an unlicensed band; wherein
the related information of the SSB comprises at least one of following:
a frequency location of a synchronization raster of the SSB;
a channel number of the SSB; and
a time domain location of the SSB.

2. The method according to claim 1, wherein the first information further comprises geographical location information detected by the terminal (11); and the determining (202) a system operating mode of the terminal (11) in a first band based on the first information comprises:
determining the system operating mode of the terminal (11) in the first band based on a location area to which the geographical location information belongs.

3. The method according to claim 1, wherein the related information of the SSB further comprises at least one of following:
feature information of at least one of a primary synchronization signal, PSS, a secondary synchronization signal, SSS, and a demodulation reference signal, DMRS, of the SSB;
an index of the SSB;
a candidate index of the SSB; and
a payload of the SSB, wherein the payload is used to indicate that the first band is a licensed band or an unlicensed band.

4. The method according to claim 3, wherein the feature information of at least one of the PSS, the SSS, and the DMRS of the SSB comprises at least one of following:
a frequency domain location relationship between the PSS and the SSS;
a time domain location relationship between the PSS and the SSS;
a phase difference between the PSS and the SSS;
a cyclic shift of the PSS;
a cyclic shift of the SSS;
a sequence of the PSS;
a sequence of the SSS;
a phase of the DMRS; and
a cyclic shift of the DMRS.

5. The method according to claim 1, wherein the first information further comprises system information received by the terminal (11) in initial access on the first band, and the system information is used to indicate that the first band is a licensed band or an unlicensed band.

6. The method according to claim 1, wherein the first information further comprises information received by the terminal (11) through a second band.

7. The method according to claim 6, wherein the first information is control information received by the terminal (11) through the second band.

8. A terminal (300), comprising:
an obtaining module (301), configured to obtain first information, wherein the first information is information detected or received by the terminal (300); and
a determining module (302), configured to determine a system operating mode of the terminal (300) in a first band based on the first information, wherein the system operating mode comprises a licensed mode and an unlicensed mode;
**characterized in that** the first information comprises related information of a synchronization signal block, SSB, detected by the terminal (300) in initial access on the first band, wherein related information of the SSB when the first band is allocated as a licensed band is different from relevant information of the SSB when the first band is allocated as an unlicensed band; wherein
the related information of the SSB comprises at least one of following:
a frequency location of a synchronization raster of the SSB;
a channel number of the SSB; and
a time domain location of the SSB.

9. The terminal (300) according to claim 8, wherein the first information further comprises geographical location information detected by the terminal (300); and the determining a system operating mode of the terminal (300) in a first band based on the first information comprises:
determining the system operating mode of the terminal (300) in the first band based on a location area to which the geographical location information belongs.

10. The terminal (300) according to claim 8, wherein the related information of the SSB further comprises at least one of following:
feature information of at least one of a primary synchronization signal, PSS, a secondary synchronization signal, SSS, and a demodulation reference signal, DMRS, of the SSB;
an index of the SSB;
a candidate index of the SSB; and
a payload of the SSB, wherein the payload is used to indicate that the first band is a licensed band or an unlicensed band.

11. The terminal (300) according to claim 8, wherein the first information further comprises system information received by the terminal (300) in initial access on the first band, and the system information is used to indicate that the first band is a licensed band or an unlicensed band.

12. The terminal (300) according to claim 8, wherein the first information further comprises information received by the terminal (300) through a second band.

13. A terminal (400), comprising: a memory (409), a processor (410), and a program stored in the memory (409) and executable on the processor (410), wherein when the program is executed by the processor (410), steps of the method for determining a system operating mode according to any one of claims 1 to 7 are implemented.

14. A computer-readable storage medium, wherein the computer-readable storage medium stores a computer program, and when the computer program is executed by a processor (410), steps of the method for determining a system operating mode according to any one of claims 1 to 7 are implemented.

15. A computer program product, wherein the computer program product is executed by at least one processor (410) to implement the method for determining a system operating mode according to any one of claims 1 to 7.

## Patentansprüche

1. Verfahren zur Bestimmung eines Systembetriebsmodus, das von einem Endgerät (11) durchgeführt wird, wobei das Verfahren umfasst:
Erhalten (201) von ersten Informationen, worin die ersten Informationen Informationen sind, die vom Endgerät (11) ermittelt oder empfangen werden; und
Bestimmen (202) eines Systembetriebsmodus des Endgeräts (11) in einem ersten Band aufgrund der ersten Informationen, worin der Systembetriebsmodus einen lizenzierten Modus und einen unlizenzierten Modus umfasst;
**dadurch gekennzeichnet, dass** die ersten Informationen zugehörige Informationen eines Synchronisationssignalblocks, SSB, umfassen, die vom Endgerät (11) in einem anfänglichen Zugang am ersten Band ermittelt werden, worin zugehörige Informationen des SSB, wenn das erste Band als ein lizenziertes Band zugewiesen ist, anders sind als relevante Informationen des SSB, wenn das erste Band als ein unlizenziertes Band zugewiesen ist; worin
die zugehörigen Informationen des SSB zumindest eines von Folgenden umfassen:
einen Frequenzstandort eines Synchronisationsrasters des SSB;
eine Kanalnummer des SSB; und
einen Zeitdomänenstandort des SSB.

2. Verfahren nach Anspruch 1, worin die ersten Informationen ferner geographische Standortinformationen umfassen, die vom Endgerät (11) ermittelt werden; und das Bestimmen (202) eines Systembetriebsmodus des Endgeräts (11) in einem ersten Band aufgrund der ersten Informationen umfasst:
Bestimmen des Systembetriebsmodus des Endgeräts (11) in dem ersten Band aufgrund eines Standortbereichs, zu dem die geographischen Standortinformationen gehören.

3. Verfahren nach Anspruch 1, worin die zugehörigen Informationen des SSB ferner zumindest eines von Folgenden umfassen:
Merkmalsinformationen von zumindest einem von einem primären Synchronisationssignal, PSS, einem sekundären Synchronisationssignal, SSS, und einem Demodulationsreferenzsignal, DMRS, des SSB;
einen Index des SSB;
einen Kandidatenindex des SSB; und
eine Nutzlast des SSB, worin die Nutzlast benutzt wird, um anzugeben, dass das erste Band ein lizenziertes Band oder ein unlizenziertes Band ist.

4. Verfahren nach Anspruch 3, worin die Merkmalsinformationen von zumindest einem vom PSS, vom SSS und vom DMRS des SSB zumindest eines von Folgenden umfassen:
eine Frequenzdomänenstandortbeziehung zwischen dem PSS und dem SSS;
eine Zeitdomänenstandortbeziehung zwischen dem PSS und dem SSS;
einen Phasenunterschied zwischen dem PSS und dem SSS;
eine zyklische Verschiebung des PSS;
eine zyklische Verschiebung des SSS;
eine Sequenz des PSS;
eine Sequenz des SSS;
eine Phase des DMRS; und
eine zyklische Verschiebung des DMRS.

5. Verfahren nach Anspruch 1, worin die ersten Informationen ferner Systeminformationen umfassen, die vom Endgerät (11) in einem anfänglichen Zugang am ersten Band empfangen werden, und die Systeminformationen benutzt werden, um anzugeben, dass das erste Band ein lizenziertes Band oder ein unlizenziertes Band ist.

6. Verfahren nach Anspruch 1, worin die ersten Informationen ferner Informationen umfassen, die vom Endgerät (11) über ein zweites Band empfangen werden.

7. Verfahren nach Anspruch 6, worin die ersten Informationen Steuerungsinformationen sind, die vom Endgerät (11) über das zweite Band empfangen werden.

8. Endgerät (300), umfassend:
ein Erhaltungsmodul (301), das dazu konfiguriert ist, erste Informationen zu erhalten, worin die ersten Informationen Informationen sind, die vom Endgerät (300) ermittelt oder empfangen werden; und
ein Bestimmungsmodul (302), das dazu konfiguriert ist, einen Systembetriebsmodus des Endgeräts (300) in einem ersten Band aufgrund der ersten Informationen zu bestimmen, worin der Systembetriebsmodus einen lizenzierten Modus und einen unlizenzierten Modus umfasst;
**dadurch gekennzeichnet, dass** die ersten Informationen zugehörige Informationen eines Synchronisationssignalblocks, SSB, umfassen, die vom Endgerät (300) in einem anfänglichen Zugang am ersten Band ermittelt werden, worin zugehörige Informationen des SSB, wenn das erste Band als ein lizenziertes Band zugewiesen ist, anders sind als relevante Informationen des SSB, wenn das erste Band als ein unlizenziertes Band zugewiesen ist; worin
die zugehörigen Informationen des SSB zumindest eines von Folgenden umfassen:
einen Frequenzstandort eines Synchronisationsrasters des SSB;
eine Kanalnummer des SSB; und
einen Zeitdomänenstandort des SSB.

9. Endgerät (300) nach Anspruch 8, worin die ersten Informationen ferner geographische Standortinformationen umfassen, die vom Endgerät (300) ermittelt werden; und das Bestimmen eines Systembetriebsmodus des Endgeräts (300) in einem ersten Band aufgrund der ersten Informationen umfasst:
Bestimmen des Systembetriebsmodus des Endgeräts (300) in dem ersten Band aufgrund eines Standortbereichs, zu dem die geographischen Standortinformationen gehören.

10. Endgerät (300) nach Anspruch 8, worin die zugehörigen Informationen des SSB ferner zumindest eines von Folgenden umfassen:
Merkmalsinformationen von zumindest einem von einem primären Synchronisationssignal, PSS, einem sekundären Synchronisationssignal, SSS, und einem Demodulationsreferenzsignal, DMRS, des SSB;
einen Index des SSB;
einen Kandidatenindex des SSB; und
eine Nutzlast des SSB, worin die Nutzlast benutzt wird, um anzugeben, dass das erste Band ein lizenziertes Band oder ein unlizenziertes Band ist.

11. Endgerät (300) nach Anspruch 8, worin die ersten Informationen ferner Systeminformationen umfassen, die vom Endgerät (300) in einem anfänglichen Zugang am ersten Band empfangen werden, und die Systeminformationen benutzt werden, um anzugeben, dass das erste Band ein lizenziertes Band oder ein unlizenziertes Band ist.

12. Endgerät (300) nach Anspruch 8, worin die ersten Informationen ferner Informationen umfassen, die vom Endgerät (300) über ein zweites Band empfangen werden.

13. Endgerät (400), umfassend: einen Speicher (409), einen Prozessor (410) und ein Programm, das im Speicher (409) gespeichert ist und am Prozessor (410) ausführbar ist, worin, wenn das Programm vom Prozessor (410) ausgeführt wird, Schritte des Verfahrens zur Bestimmung eines Systembetriebsmodus nach einem der Ansprüche 1 bis 7 implementiert werden.

14. Computerlesbares Speichermedium, worin das computerlesbare Speichermedium ein Computerprogramm speichert, und wenn das Computerprogramm von einem Prozessor (410) ausgeführt wird, Schritte des Verfahrens zur Bestimmung eines Systembetriebsmodus nach einem der Ansprüche 1 bis 7 implementiert werden.

15. Computerprogrammprodukt, worin das Computerprogrammprodukt von zumindest einem Prozessor (410) ausgeführt wird, um das Verfahren zur Bestimmung eines Systembetriebsmodus nach einem der Ansprüche 1 bis 7 zu implementieren.

## Revendications

1. Procédé de détermination d'un mode de fonctionnement de système, effectué par un terminal (11), et le procédé comprenant :
l'obtention (201) de premières informations, dans lequel les premières informations sont des informations détectées ou reçues par le terminal (11) ; et
la détermination (202) d'un mode de fonctionnement de système du terminal (11) dans une première bande sur la base des premières informations, dans lequel le mode de fonctionnement de système comprend un mode sous licence et un mode sans licence ;
**caractérisé en ce que** les premières informations comprennent des informations connexes d'un bloc de signal de synchronisation SSB détecté par le terminal (11) en accès initial sur la première bande, dans lequel les informations connexes du SSB lorsque la première bande est allouée en tant que bande sous licence sont différentes des informations pertinentes du SSB lorsque la première bande est allouée en tant que bande sans licence ; dans lequel
les informations connexes du SSB comprennent au moins l'un des éléments suivants :
un emplacement de fréquence d'une trame de synchronisation du SSB ;
un numéro de canal du SSB ; et
un emplacement de domaine temporel du SSB.

2. Procédé selon la revendication 1, dans lequel les premières informations comprennent en outre des informations d'emplacement géographique détectées par le terminal (11) ; et la détermination (202) d'un mode de fonctionnement de système du terminal (11) dans une première bande sur la base des premières informations comprend :
la détermination du mode de fonctionnement de système du terminal (11) dans la première bande sur la base d'une zone d'emplacement à laquelle les informations d'emplacement géographique appartiennent.

3. Procédé selon la revendication 1, dans lequel les informations connexes du SSB comprennent en outre au moins l'un des éléments suivants :
des informations de caractéristiques d'au moins l'un d'un signal de synchronisation primaire PSS, d'un signal de synchronisation secondaire SSS, et d'un signal de référence de démodulation DMRS, du SSB ;
un indice du SSB ;
un indice candidat du SSB ; et
une charge utile du SSB, dans lequel la charge utile est utilisée pour indiquer que la première bande est une bande sous licence ou une bande sans licence.

4. Procédé selon la revendication 3, dans lequel les informations de caractéristique d'au moins un élément parmi le PSS, le SSS et le DMRS du SSB comprennent au moins l'un des éléments suivants :
une relation d'emplacement de domaine fréquentiel entre le PSS et le SSS ;
une relation d'emplacement de domaine temporel entre le PSS et le SSS ;
une différence de phase entre le PSS et le SSS ;
un décalage cyclique du PSS ;
un décalage cyclique du SSS ;
une séquence du PSS ;
une séquence du SSS ;
une phase du DMRS ; et
un décalage cyclique du DMRS.

5. Procédé selon la revendication 1, dans lequel les premières informations comprennent en outre des informations système reçues par le terminal (11) en accès initial sur la première bande, et les informations système sont utilisées pour indiquer que la première bande est une bande sous licence ou une bande sans licence.

6. Procédé selon la revendication 1, dans lequel les premières informations comprennent en outre des informations reçues par le terminal (11) par l'intermédiaire d'une seconde bande.

7. Procédé selon la revendication 6, dans lequel les premières informations sont des informations de commande reçues par le terminal (11) à travers la seconde bande.

8. Terminal (300), comprenant :
un module d'obtention (301), configuré pour obtenir des premières informations, dans lequel les premières informations sont des informations détectées ou reçues par le terminal (300) ; et
un module de détermination (302), configuré pour déterminer un mode de fonctionnement de système du terminal (300) dans une première bande sur la base des premières informations, dans lequel le mode de fonctionnement de système comprend un mode sous licence et un mode sans licence ;
**caractérisé en ce que** les premières informations comprennent des informations connexes d'un bloc de signal de synchronisation SSB détecté par le terminal (300) en accès initial sur la première bande, dans lequel les informations connexes du SSB lorsque la première bande est allouée en tant que bande sous licence sont différentes des informations pertinentes du SSB lorsque la première bande est allouée en tant que bande sans licence ; dans lequel
les informations connexes du SSB comprennent au moins l'un des éléments suivants :
un emplacement de fréquence d'une trame de synchronisation du SSB ;
un numéro de canal du SSB ; et
un emplacement de domaine temporel du SSB.

9. Terminal (300) selon la revendication 8, dans lequel les premières informations comprennent en outre des informations d'emplacement géographique détectées par le terminal (300) ; et la détermination d'un mode de fonctionnement de système du terminal (300) dans une première bande sur la base des premières informations comprend :
la détermination du mode de fonctionnement de système du terminal (300) dans la première bande sur la base d'une zone d'emplacement à laquelle les informations d'emplacement géographique appartiennent.

10. Terminal (300) selon la revendication 8, dans lequel les informations connexes du SSB comprennent en outre au moins l'un des éléments suivants :
des informations de caractéristiques d'au moins l'un d'un signal de synchronisation primaire PSS, d'un signal de synchronisation secondaire SSS, et d'un signal de référence de démodulation DMRS, du SSB ;
un indice du SSB ;
un indice candidat du SSB ; et
une charge utile du SSB, dans lequel la charge utile est utilisée pour indiquer que la première bande est une bande sous licence ou une bande sans licence.

11. Terminal (300) selon la revendication 8, dans lequel les premières informations comprennent en outre des informations système reçues par le terminal (300) en accès initial sur la première bande, et les informations système sont utilisées pour indiquer que la première bande est une bande sous licence ou une bande sans licence.

12. Terminal (300) selon la revendication 8, dans lequel les premières informations comprennent en outre des informations reçues par le terminal (300) par l'intermédiaire d'une seconde bande.

13. Terminal (400), comprenant: une mémoire (409), un processeur (410) et un programme stocké dans la mémoire (409) et exécutable sur le processeur (410), dans lequel lorsque le programme est exécuté par le processeur (410), des étapes du procédé de détermination d'un mode de fonctionnement de système selon l'une quelconque des revendications 1 à 7 sont mises en œuvre.

14. Support de stockage lisible par ordinateur, dans lequel le support de stockage lisible par ordinateur stocke un programme informatique, et lorsque le programme informatique est exécuté par un processeur (410), les étapes du procédé de détermination d'un mode de fonctionnement de système selon l'une quelconque des revendications 1 à 7 sont mises en œuvre.

15. Produit de programme informatique, dans lequel le produit de programme informatique est exécuté par au moins un processeur (410) pour mettre en œuvre le procédé de détermination de mode de fonctionnement de système selon l'une quelconque des revendications 1 à 7.
